# EUROPÄISCHE PATENTSCHRIFT

(11) **EP 0 554 417 B1**
(45) Veröffentlichungstag und Bekanntmachung des Hinweises auf die Patenterteilung: **31.01.1996**
(21) Anmeldenummer: 92915883.0
(22) Anmeldetag: 30.07.1992
(51) Int. Cl.: G01D 5/20

(54) **MESSEINRICHTUNG ZUR BERÜHRUNGSFREIEN BESTIMMUNG DES WEGS ODER DES DREHWINKELS EINES BAUTEILS**
DEVICE FOR THE NON-CONTACT MEASUREMENT OF THE DISPLACEMENT OR ANGLE OF ROTATION OF A COMPONENT
DISPOSITIF DE MESURE POUR LA DETERMINATION SANS CONTACT DU DEPLACEMENT OU DE L'ANGLE DE ROTATION D'UN COMPOSANT

(30) Priorität: 24.08.1991 DE 4128159
(43) Veröffentlichungstag der Anmeldung: 11.08.1993
(73) Patentinhaber: ROBERT BOSCH GMBH, D-70442 Stuttgart (DE)
(72) Erfinder: DOBLER, Klaus, D-7016 Gerlingen (DE); HACHTEL, Hansjoerg, D-7251 Weissach (DE)
(86) Internationale Anmeldenummer: DE9200628
(87) Internationale Veröffentlichungsnummer: WO9304341

(56) Entgegenhaltungen:
- WO-A-86/07144
- DE-A- 3 424 461
- DE-A- 4 026 917
- FR-A- 1 144 347
- FR-A- 1 495 913
- IBM TECHNICAL DISCLOSURE BULLETIN, vol. 22, no. 8B, August 1980, pp. 3531-3532; A. BRENNEMANN : "Linear Variable Capacitor Encoder"

## Beschreibung

Die Erfindung geht aus von einer Meßeinrichtung zur berührungsfreien Bestimmung des Wegs oder des Drehwinkels eines Bauteils nach der Gattung des Anspruchs 1 bzw. 2.

Eine derartige Meßeinrichtung ist zum Beispiel aus der DE-OS 34 24 461 bekannt, bei der auf einem als Spulenkörper dienenden Zylinderrohr in Reihe verschaltete Spulen angeordnet sind. Im Inneren dieses Zylinderrohrs wird ein Kolben, der mit dem zu überwachenden Bauteil verbunden ist, bewegt. Jeweils am äußeren Ende weist die Spule in einem Randbereich eine Doppelschichtwicklung auf, um im Randbereich ein Abweichen der Kennlinie vom linearen Verlauf zu vermeiden. Diese Meßeinrichtung hat aber eine relativ große Baulänge bei einem nur relativ geringen Meßweg.

In der WO-A-86/07144 ist eine Sensoranordnung dargestellt, bei der eine Meßspule relativ zu einem Meßrohr verschoben wird. Die Meßspule weist dabei am Rand oder an bestimmten Stellen Bereiche mit unterschiedlicher Wicklungsdichte auf. Diese Bereiche haben aber eine kontinuierlich verlaufende Wicklungsdichte. Dadurch können entweder im Randbereich auftretende Abweichungen von der Linearität ausgeglichen werden oder bestimmte Bereiche der Meßspule den erforderlichen Empfindlichkeiten angepaßt werden.

Das in der FR-A-1 495 913 dargestellte Meßsystem arbeitet nach dem Tauchankerprinzip. Hier steht ein relativ langes Mittelteil in Wirkverbindung mit zwei in Differentialschaltung verschalteten Spulen. Die Bewegung des Mittelteils wird gegensinnig in den beiden Spulen erfaßt. Der Meßbereich dieses Meßsystems ist sehr kurz und nahezu auf die halbe Spulenlänge begrenzt.

Der Erfindung liegt die Aufgabe zugrunde, eine Meßeinrichtung zur berührungsfreien Bestimmung des Wegs oder des Drehwinkels eines Bauteils zu schaffen, die über den gesamten Meßweg eine nahezu lineare Kennlinie aufweist und eine kompakte Bauweise erlaubt. Diese Aufgabe wird durch die in den unabhängigen Ansprüchen 1 und 2 gekennzeichneten Merkmale gelöst.

### Vorteile der Erfindung

Die erfindungsgemäße Meßeinrichtung des Anspruchs 1 bzw. 2 hat demgegenüber den Vorteil, daß sie gegenüber bisherigen Lösungen mit gleicher Meßwegstrecke eine wesentlich geringere Baulänge aufweist. Ferner ist es in einfacher Weise möglich, das zu überwachende Bauteil seitlich, das heißt in radialer Richtung des Spulenkörpers anzukoppeln. Ist die Länge des Übergangsbereichs, das heißt der Abstand zwischen den beiden Spulenenden mit dem Meßelement abgestimmt, so erhält man über den gesamten Meßweg eine nahezu lineare Kennlinie. Durch die Anordnung der beiden Meßbereiche zueinander sind die Meßsignale der Ausgangskennlinie eindeutig zuordbar.

Durch die in den abhängigen Patentansprüchen aufgeführten Maßnahmen sind vorteilhafte Weiterbildungen der im Anspruch 1 bzw. 2 angegebenen Meßeinrichtung möglich.

### Zeichnung

Ausführungsbeispiele der Erfindung sind in der Zeichnung dargestellt und in der nachfolgenden Beschreibung näher erläutert. Es zeigen die Figur 1 einen Längsschnitt durch eine Meßeinrichtung, die Figur 2 ein weiteres Ausführungsbeispiel und Figur 3 eine Meßeinrichtung zur Bestimmung eines Drehwinkels.

### Beschreibung der Ausführungsbeispiele

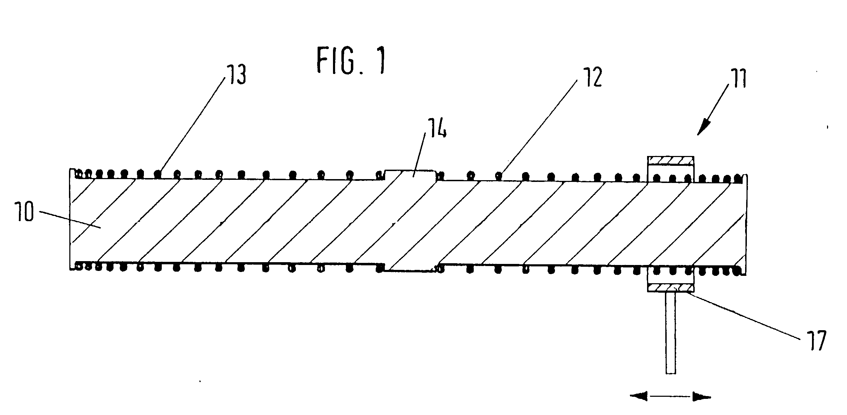

In der Figur 1 ist mit 10 ein zylinderförmiger Spulenkörper einer Meßeinrichtung 11 bezeichnet. Auf den Spulenkörper 10 ist eine erste Meßspule 12 und eine zweite Meßspule 13 aufgewickelt. Beide Meßspulen 12, 13 werden durch einen etwa in axialer Richtung des Spulenkörpers 10 gesehen in der Mitte befindlichen Übergangsbereich 14 voneinander getrennt. Beide Meßspulen 12, 13 weisen von den äußeren Enden des Spulenkörpers 10 zum Übergangsbereich 14 hin eine abnehmende Wicklungsdichte auf. Hierzu sind die Spulen 12, 13 beginnend am äußeren Ende des Spulenkörpers 10 zum Übergangsbereich 14 hin jeweils mit einem zunehmenden Abstand zwischen den Windungen gewickelt. Dieser Abstand kann kontinuierlich oder auch diskontinuierlich zunehmen, so daß man eine kontinuierlich oder diskontinuierlich sich verändernde Wicklungsdichte der beiden Meßspulen 12, 13 erhält. Durch diese Anordnung der beiden Meßspulen 12, 13 erhält man jeweils ein unsymmetrisches Magnetfeld, wenn die Meßspulen 12, 13 von einem Strom, insbesondere einem Wechselstrom durchflossen sind. Wesentlich ist dabei aber immer, daß sich der Bereich beider Meßspulen 12, 13 mit dem größten Abstand zwischen den Windungen, das heißt der Bereich mit dem kleinsten Magnetfeld, sich am Übergangsbereich 14 befindet. In der Figur 1 sind die Meßspulen 12, 13 einlagig dargestellt. Selbstverständlich wäre es auch möglich, die Meßspulen mehrlagig auszubilden, wobei die unterschiedlichen Lagen nicht über die gesamte Länge der jeweiligen Meßspule verlaufen müssen.

Der Spulenkörper 10 und die beiden Meßspulen 12, 13 werden von einer Meßhülse 17 umgriffen, an die ein, in der Zeichnung nicht dargestelltes Bauteil befestigt ist, dessen Bewegung bestimmt werden soll. Der Innendurchmesser der Meßhülse 17 ist dabei so groß, daß die Meßhülse 17 über den gesamten Meßbereich, das heißt über die gesamte Länge des Spulenkörpers 10 bewegt werden kann, ohne daß sie die Meßspulen 12, 13 oder den Übergangsbereich 14 berührt. Die axiale Länge der Meßhülse 17 ist so abzustimmen, daß sich über dem gesamten Meßbereich eine lineare Eichkennlinie ergibt. Die beiden Längen sind dabei so aufeinander abzustimmen, wie später bei der Funktionsbeschreibung noch erläutert wird, daß das Meßsignal über den gesamten Meßweg einen linearen Verlauf aufweist und die Meßkurve im Übergangsbereich 14 keinen Knick hat. In einem praktischen Ausführungsbeispiel hat die Meßhülse 17 eine Länge von ca. 10 mm und der Übergangsbereich eine Länge von ca. 10 mm. Hierbei ist aber jeweils immer auch die Spulengeometrie mit zu berücksichtigen und die Daten sind untereinander abzustimmen. Die oben angegebenen Angaben beziehen sich auf eine jeweilige Länge der Spulen von 42 mm, so daß man bei einer Gesamtspulenlänge von 94 mm eine nutzbare Meßlänge s von 86 mm erhält. Der Spulenaußendurchmesser würde 10,5 mm und der Hülseninnendurchmesser 12 mm betragen.

Die Meßeinrichtung 10 kann in einfacher Weise nach verschiedenen Meßprinzipien betrieben werden. Soll sie nach dem sogenannten Wirbelstromprinzip arbeiten, so muß die Meßhülse 17 aus elektrisch leitendem (ferromagnetischer und/oder nicht ferromagnetischer Stoff) bestehen oder wenigstens auf der Innenwand der Meßhülse eine Schicht aus elektrisch leitendem Material aufweisen. Werden die Spulen 12, 13 von einem insbesonders hochfrequenten Wechselstrom durchflossen, so entsteht an den Spulen 12, 13 ein magnetisches Wechselfeld, das auf der elektrisch leitenden Fläche der Meßhülse 17 Wirbelströme bewirkt. Je größer dabei das Wechselfeld ist, desto mehr Wirbelströme werden auf der vom Magnetfeld durchsetzten Fläche des Meßteils 17 erzeugt. Ferner ist die Größe der erzeugten Wirbelströme abhängig vom verwendeten Material der Meßhülse 17 sowie vom Abstand der Oberfläche der Spulen 12, 13 zu der Innenwand der Meßhülse 17. Da der Abstand zwischen der Innenwand der Meßhülse 17 und der Spulen 12, 13 über die gesamte Meßlänge nahezu konstant sein soll und auch das Material der Meßhülse 17 vorgegeben ist, wird die Größe der sich ändernden Wirbelströme in erster Linie durch die über die Länge der jeweiligen Spulen 12, 13 sich ändernde Wicklungsdichte bewirkt.

Durch die auf der Meßhülse 17 erzeugten Wirbelströme wird der Spulen-Wechselstromwiderstand verändert, was zur Meßsignalgewinnung ausgenützt wird. Bei der Längsbewegung der Meßhülse 17 über die Spulen 12 und 13 hinweg, wobei diese Bewegung entsprechend der Bewegung des angeschlossenen, nicht dargestellten Bauteils ist, ändert sich die Größe des wirkenden Magnetfeldes, was zu einer Änderung der erzeugten Wirbelströme und folglich auch zu einer Veränderung des Spulen-Wechselstromwiderstands führt. Das dadurch erzeugte Meßsignal ist über den gesamten Meßbereich, das heißt über die Länge der beiden Spulen 12, 13 und die Länge des Übergangsbereichs 14 bei entsprechender Auslegung der Wicklungsabstände nahezu linear. Hierzu sind die beiden Spulen 12, 13, in einer sogenannten Wheatstone'schen Halbbrückenschaltung verschaltet. Kommt die Meßhülse 17 in den Übergangsbereich 14, so ergibt sich eine Verlagerung der Meßsignalgewinnung von der einen Meßspule 12 auf die andere Meßspule 13. Wichtig ist dabei, daß die Enden der Spulen 12, 13 mit dem größten Abstand zwischen den einzelnen Windungen, das heißt also die Enden der Spulen, an denen sich die geringeren Wirbelströme ausbilden, sich am Übergangsbereich befinden, also axial zugewandt angeordnet sind. Dies ist notwendig, da sich die Induktivitäten der beiden Meßspulen 12, 13 nur gegensinnig ändern dürfen. Würden hingegen die anderen Enden einander zugeordnet sein, so würden sich im Übergangsbereich 14 keine eindeutig zuordbaren Meßsignale ausbilden.

Selbstverständlich wäre es auch möglich, die Meßeinrichtung 10 statt nach dem Wirbelstromprinzip nach dem induktiven Meßverfahren zu betreiben. Hierzu muß lediglich die Meßhülse auf der den Spulen zugewandten Oberfläche aus ferromagnetischem Material bestehen. Hierzu kann wieder die Meßhülse aus ferromagnetischem Material hergestellt sein oder eine ferromagnetische Schicht aufweisen. Während sich beim Wirbelstromprinzip die Spuleninduktivität verringert, wird sie sich beim induktiven Verfahren abhängig von den ferromagnetischen Eigenschaften des Materials (ferromagnetischer Effekt) erhöhen. Die konstruktive Ausgestaltung und die Funktionsweise sind analog, wie sie oben für das Wirbelstromverfahren beschrieben sind.

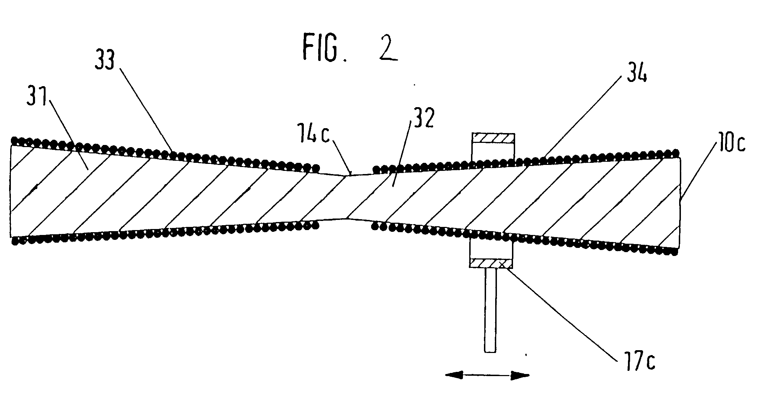

Ein inhomogenes Magnetfeld, das sich kontinuierlich oder diskontinuierlich über den Meßbereich ändert, kann, wie in der Figur 2 dargestellt ist, auch mit Hilfe eines zwei kegelstumpfförmig oder ähnlich ausgebildete Bereiche aufweisenden Spulenkörpers 10c erzeugt werden. Die beiden Bereiche 31, 32 des Spulenkörpers 10c sind dabei so angeordnet, daß die Seitenfläche mit dem geringeren Durchmesser aneinanderstoßen. Auf diesen beiden Abschnitten 31, 32 sind wieder jeweils eine Meßspule 33, 34 aufgewickelt. Zwischen den beiden Meßspulen 33, 34 entsteht wieder im Bereich des Spulenkörpers 10a mit den geringsten Durchmessern ein Übergangsbereich 14c, der frei von Wicklungen ist. Die axiale Länge dieses Übergangsbereichs 14c ist wiederum auf die Länge der den Spulenkörper 10c umgreifenden Meßhülse 17c abgestimmt, wie es bereits oben bei dem anderen Ausführungsbeispiel erläutert ist. Die Wicklungsdichte der beiden Spulen 33, 34 ist über die gesamte Länge der jeweiligen Spulen 33, 34 homogen. Das inhomogene Wechselfeld und dadurch die veränderliche Wirbelstromausbildung wird bei dem Ausführungsbeispiel nach der Figur 2 durch den sich kontinuierlich oder eventuell auch diskontinuierlich ändernden Abstand zwischen der Innenwand der Meßhülse 17c und der Oberfläche der Meßspulen 33, 34 bewirkt. Ferner wäre es auch möglich, die in den Ausführungsbeispielen nach der Figur 1 und nach der Figur 2 erläuterten Möglichkeiten zur Erzeugung eines inhomogenen Magnetfeldes miteinander zu kombinieren.

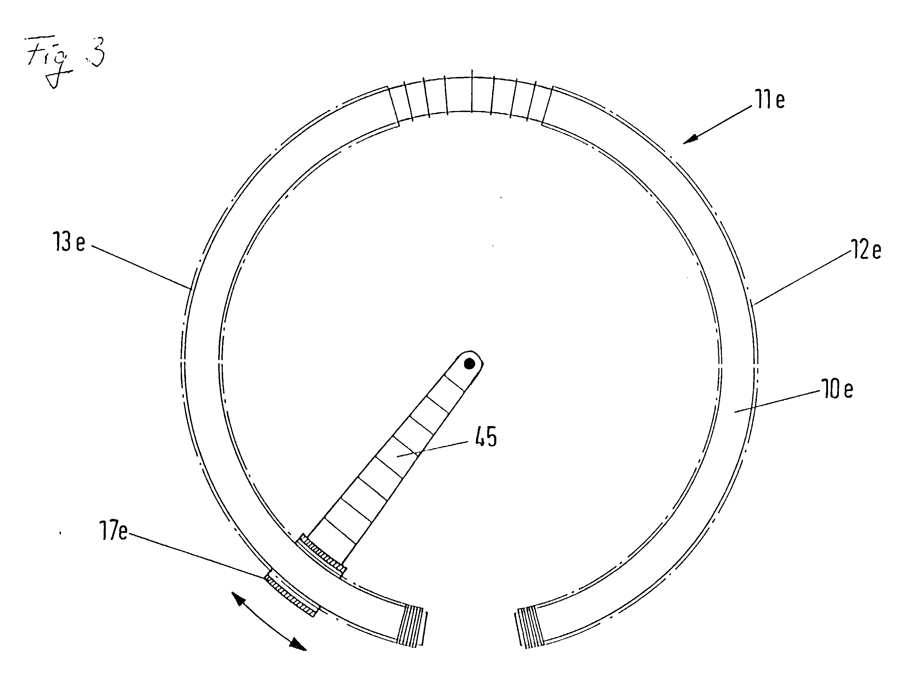

In den bisherigen Ausführungsbeispielen nach den Figuren 1 und 2 wurde die Erfassung einer linearen Bewegung eines Bauteils dargestellt. Selbstverständlich ist es auch möglich, die Anordnungen nach den Figuren 1 und 2 zur Bestimmung eines Drehwinkels umzugestalten. Als Beispiel ist eine Ausgestaltung in der Figur 3 gezeigt, die nach dem Wirbelstromprinzip oder nach dem Induktivprinzip arbeitet und eine Abwandlung nach der Figur 1 darstellt. Hierbei sind der Spulenkörper 10e, die Meßspulen 12e, 13e und die Meßhülse 17e kreissegmentartig ausgebildet. Sowohl der Spulenkörper 10e, als auch die Spulen 12e und 13e sind ortsfest angeordnet. Von der Meßhülse 17e führt ein Hebel 45 zum Bauteil, dessen Drehbewegung bestimmt werden soll. Mit dieser Meßeinrichtung lle können in vorteilhafter Weise Drehwinkel erfaßt werden, die größer als 180° sind. Bei bisher bekannten Lösungen ergaben sich bei Drehwinkeln über 180° Probleme mit der Zuordnung der gewonnenen Signale. Ferner weist dieser Sensor, wie oben zuvor beschrieben, eine geringe Offsetdrift auf, was durch die symetrische Bauweise der beiden Sensorspulen 12e, 13e begründet ist.

Die so gewonnenen Meßsignale können unterschiedlichen, hier nicht dargestellten Auswerteschaltungen und Auswerteverfahren zugeführt werden. Als Meßgröße können hierzu der Wechselstromwiderstandswert, der induktive Widerstand, oder auch die Induktivität ausgewertet werden.

## Patentansprüche

1. Meßeinrichtung (11) zur berührungsfreien Bestimmung des Wegs oder des Drehwinkels eines Bauteils mit Hilfe zweier auf einem Spulenkörper (10) befindlichen Spulen (12, 13) und einem relativ dazu bewegten Meßteil (17), das mit dem Bauteil verbunden ist, wobei sich zwischen den beiden Spulen (12, 13) ein Übergangsbereich (14) befindet und die Stärke des Magnetfelds der jeweiligen Spule (12, 13) unsymmetrisch ist, dadurch gekennzeichnet, daß die Länge des Übergangsbereichs (14) etwa der Länge des Meßteils (17) entspricht, daß das Meßteil (17) hülsenförmig ausgebildet ist und den Spulenkörper (10) umgreift, daß das Bauteil seitlich an dem Meßteil (17) befestigt ist, und daß zur Erzeugung eines abnehmenden Magnetfelds die Spulen (12, 13) einlagig gewickelt sind und die Spulen (12, 13) zum Übergangsbereich (14) hin eine kontinuierlich oder diskontinuierlich abnehmende Wicklungsdichte aufweisen.

2. Meßeinrichtung (11) zur berührungsfreien Bestimmung des Wegs oder des Drehwinkels eines Bauteils mit Hilfe zweier auf einem Spulenkörper (10) befindlichen Spulen (12, 13) und einem relativ dazu bewegten Meßteil (17), das mit dem Bauteil verbunden ist, wobei sich zwischen den beiden Spulen (12, 13) ein Übergangsbereich (14) befindet und die Stärke des Magnetfelds der jeweiligen Spulen (12, 13) unsymmetrisch ist, dadurch gekennzeichnet, daß die Länge des Übergangsbereichs (14) etwa der Länge des Meßteils (17) entspricht, daß das Meßteil (17) hülsenförmig ausgebildet ist und den Spulenkörper (10) umgreift, daß das Bauteil seitlich an dem Meßteil (17) befestigt ist, und daß zur Erzeugung eines abnehmenden Magnetfelds die Spulen (12, 13) einlagig mit konstanter Wicklungsdichte gewickelt sind, der Spulenkörper (10) aus zwei kegelstumpfartigen Abschnitten besteht, zwischen denen sich der Übergangsbereich (14) befindet und diese Abschnitte einen zum Übergangsbereich (14) hin abnehmenden Durchmesser aufweisen.

3. Meßeinrichtung nach Anspruch 1, dadurch gekennzeichnet, daß der Spulenkörper (10) im Bereich der Spulen (12, 13) einen gleichbleibenden Durchmesser aufweist.

4. Meßeinrichtung nach einem der Ansprüche 1 bis 3, dadurch gekennzeichnet, daß das Meßteil (17) wenigstens teilweise aus elektrisch leitendem Material besteht und daß die Spulen (12, 13) von einem Wechselstrom durchflossen werden.

5. Meßeinrichtung nach einem der Ansprüche 1 bis 3, dadurch gekennzeichnet, daß das Meßteil (17) aus ferromagnetischem Material besteht und daß die Meßspulen (12, 13) von einem Wechselstrom durchflossen werden.

6. Meßeinrichtung nach einem der Ansprüche 1 bis 5, dadurch gekennzeichnet, daß die beiden Spulen (12, 13) in einer Wheatstone'schen Halbbrücke oder zu einem Spannungsteiler verschaltet sind.

7. Meßeinrichtung nach einem der Ansprüche 1 bis 6, dadurch gekennzeichnet, daß sich die Induktivitäten der beiden Spulen (12, 13) am Übergangsbereich (14) gegensinnig ändern.

## Claims

1. Measuring device (11) for contact-free determination of the displacement or of the rotation angle of a component with the aid of two coils (12, 13), which are located on a coil former (10), and of a measuring part (17) which is moved relative thereto and is connected to the component, a transition region (14) being located between the two coils (12, 13) and the strength of the magnetic field of the respective coil (12, 13) being asymmetric, characterized in that the length of the transition region (14) corresponds approximately to the length of the measuring part (17), in that the measuring part (17) is designed in the form of a sleeve and engages around the coil former (10), in that the component is attached at the side to the measuring part (17), and in that the coils (12, 13) are wound in one layer in order to produce a reducing magnetic field and the coils (12, 13) have a continuously or discontinuously reducing winding density towards the transition region (14).

2. Measuring device (11) for contact-free determination of the displacement or of the rotation angle of a component with the aid of two coils (12, 13), which are located on a coil former (10), and of a measuring part (17) which is moved relative thereto and is connected to the component, a transition region (14) being located between the two coils (12, 13) and the strength of the magnetic field of the respective coils (12, 13) being asymmetric, characterized in that the length of the transition region (14) corresponds approximately to the length of the measuring part (17), in that the measuring part (17) is designed in the form of a sleeve and engages around the coil former (10), in that the component is attached at the side to the measuring part (17), and in that the coils (12, 13) are wound in one layer with a constant winding density in order to produce a reducing magnetic field, the coil former (10) comprises two sections like truncated cones between which the transition region (14) is located, and these sections have a diameter which reduces towards the transition region (14).

3. Measuring device according to Claim 1, characterized in that the coil former (10) has a constant diameter in the region of the coils (12, 13).

4. Measuring device according to one of Claims 1 to 3, characterized in that the measuring part (17) is at least partially composed of electrically conductive material, and in that an alternating current flows through the coils (12, 13).

5. Measuring device according to one of Claims 1 to 3, characterized in that the measuring part (17) is composed of ferromagnetic material, and in that an alternating current flows through the measuring coils (12, 13).

6. Measuring device according to one of Claims 1 to 5, characterized in that the two coils (12, 13) are connected in a Wheatstone half-bridge or to form a voltage divider.

7. Measuring device according to one of Claims 1 to 6, characterized in that the inductances of the two coils (12, 13) change in opposite senses at the transition region (14).

## Revendications

1. Dispositif de mesure (11) pour la détermination sans contact du déplacement ou de l'angle de rotation d'un composant au moyen de deux bobines (12, 13) montées sur un corps (10) et d'un organe de mesure se déplaçant par rapport aux bobines et relié au composant, une zone de transition (14) séparant les deux bobines (12, 13) qui engendrent chacune un champ magnétique d'intensité asymétrique, caractérisé en ce que la longueur de la zone de transition (14) correspond sensiblement à celle de l'organe de mesure (17) qui a la forme d'une douille entourant le corps des bobines (10) et sur laquelle est monté latéralement le composant, tandis que pour créer un champ magnétique décroissant, les bobines (12, 13) présentent une couche d'enroulement unique dont la densité de bobinage va décroissant, en continu ou avec discontinuité, en direction de la zone de transition (14).

2. Dispositif de mesure (11) pour la détermination sans contact du déplacement ou de l'angle de rotation d'un composant au moyen de deux bobines (12, 13) montées sur un corps (10) et d'un organe de mesure se déplaçant par rapport aux bobines et relié au composant, une zone de transition (14) séparant les deux bobines (12, 13) qui engendrent chacune un champ magnétique d'intensité asymétrique, caractérisé en ce que la longueur de la zone de transition (14) correspond sensiblement à celle de l'organe de mesure (17) qui a la forme d'une douille entourant le corps des bobines (10) et sur laquelle est monté latéralement le composant, tandis que pour créer un champ magnétique décroissant, les bobines (12, 13) présentent une couche d'enroulement unique et dont la densité de bobinage est constante, le corps de bobines (10) étant constitué de deux parties coniques encadrant la zone de transition (14) et présentant des diamètres allant décroissant en direction de cette zone.

3. Dispositif de mesure selon la revendication 1, caractérisé en ce que le corps de bobines (10), dans la zone des bobines (12, 13) présente un diamètre constant.

4. Dispositif de mesure selon une des revendications 1 à 3, caractérisé en ce que l'organe de mesure (17) est fait au moins en partie d'un matériau conducteur de l'électricité, les bobines (12, 13) étant traversées par un courant alternatif.

5. Dispositif de mesure selon une des revendications 1 à 3, caractérisé en ce que l'organe de mesure (17) est fait d'un matériau magnétique, les bobines de mesure (12, 13) étant traversées par un courant alternatif.

6. Dispositif de mesure selon une des revendications 1 à 3, caractérisé en ce que les deux bobines (12, 13) sont montées dans un demi-pont de Wheatstone ou raccordées à un diviseur de tension.

7. Dispositif de mesure selon une des revendications 1 à 6, caractérisé en ce que les inductances des deux bobines (13, 14) varient en sens contraire au niveau de la zone de transition (14).
